# EUROPEAN PATENT APPLICATION

(11) **EP 4 648 297 A1**
(43) Date of publication of application: **12.11.2025**
(21) Application number: 24202020.4
(22) Date of filing: 23.09.2024
(51) Int. Cl.: H04B 3/54

(54) **BALCONY PHOTOVOLTAIC SYSTEM AND COMMUNICATION SYSTEM FOR BALCONY PHOTOVOLTAIC SYSTEM**

(30) Priority: 11.05.2024 CN 202421021733 U
(71) Applicant: Sunshare Power Technology Co., Ltd., Nanjing Jiangsu 211153 (CN)
(72) Inventor: ZHU, Liangbing, Nanjing, 211153 (CN); ZHANG, Yuehuo, Nanjing, 211153 (CN)
(74) Representative: Rooney, John-Paul

(57) **Abstract**

A balcony photovoltaic system and a communication system for the balcony photovoltaic system are provided according to the present disclosure, relating to the technical field of photovoltaics. The communication system includes a signal modulation module and a signal demodulation module. An input terminal of the signal modulation module is connected to a communication terminal of an inverter in the balcony photovoltaic system to receive system data of the inverter. An output terminal of the signal modulation module is coupled to an output terminal at an alternating-current side of the inverter, to output a modulated signal of the system data to a power line for connecting the output terminal at the alternating-current side with a household power distribution system. An input terminal of the signal demodulation module is connected to the household power distribution system to receive the modulated signal. An output terminal of the signal demodulation module is connected to a preset device to output a demodulated signal of the modulated signal to the preset device. According to the present disclosure, the stability of the communication connection between the inverter and the preset device is improved while reducing the wiring workload.

## Description

### FIELD

The present disclosure relates to the technical field of photovoltaics, and in particular to a balcony photovoltaic system and a communication system for the balcony photovoltaic system.

### BACKGROUND

In recent years, with the continuous development of the renewable energy technology, a balcony photovoltaic system is increasingly applied in families. In the balcony photovoltaic system, an output terminal of a photovoltaic module is connected to a direct-current side of an inverter. An output terminal at an alternating-current side of the inverter is connected to a corresponding household power distribution system. The balcony photovoltaic system is capable to convert solar energy into electric energy and supply power to the household power distribution system.

In order to meet requirements of users to view operation data of the balcony photovoltaic system, the inverter is provided with a wireless fidelity (Wi-Fi) module. The inverter collects the operation data of the balcony photovoltaic system, and transmits the operation data to an indoor preset device through the Wi-Fi module, allowing that the users directly or indirectly obtain the operation data through the preset device.

However, the Wi-Fi module of the inverter is relatively far away from the preset device, and an obstacle such as a wall is arranged between the Wi-Fi module and the preset device, resulting in poor stability of communication connection between the Wi-Fi module and the preset device. The following solution is provided to improve the stability of the communication connection. One terminal of a communication extension line with a suitable length is connected to the Wi-Fi module of the inverter, and another terminal is arranged at a position close to the preset device. However, this solution has a heavy wiring workload. Therefore, how to improve the stability of the communication connection between the inverter and the preset device while reducing the wiring workload is a technical problem to be solved urgently.

### SUMMARY

In order to solve above problems, a balcony photovoltaic system and a communication system for the balcony photovoltaic system are provided according to the present disclosure, to improve the stability of the communication connection between the inverter and the preset device while reducing the wiring workload.

In order to achieve the above objectives, the following technical solutions are provided according to the present disclosure.

A communication system for a balcony photovoltaic system is provided according to the present disclosure. The communication system for the balcony photovoltaic system includes a signal modulation module and a signal demodulation module. An input terminal of the signal modulation module is configured to connect a communication terminal of an inverter in the balcony photovoltaic system, and receive system data of the inverter. An output terminal of the signal modulation module is configured to couple an output terminal at an alternating-current side of the inverter, and output a modulated signal of the system data to a power line for connecting the output terminal at the alternating-current side with a household power distribution system. An input terminal of the signal demodulation module is configured to connect the household power distribution system and receive the modulated signal. An output terminal of the signal demodulation module is configured to connect a preset device, and output a demodulated signal of the modulated signal to the preset device.

In an embodiment, the signal modulation module is provided with a first power line communication, PLC, unit; and the signal demodulation module is provided with a second PLC unit.

In an embodiment, the signal demodulation module is integrated into the preset device.

In an embodiment, the signal demodulation module is integrated into other household device except the preset device, and the signal demodulation module is further provided with a communication unit; and the signal demodulation module is communicatively connected to the preset device through the communication unit.

In an embodiment, the other household device is a socket or a switch panel.

In an embodiment, the communication unit is a Wi-Fi unit or a wired communication unit.

In an embodiment, the system data includes a subcarrier signal corresponding to a digital quantity, and a subcarrier signal corresponding to an analog quantity.

In an embodiment, the preset device is a router. The preset device is independent of the communication system; or, the preset device is included in the communication system. The preset device is configured to output the demodulated signal to a preset server.

A balcony photovoltaic system is further provided according to the present disclosure, and the balcony photovoltaic system includes at least one photovoltaic module, an inverter and the communication system for the balcony photovoltaic system as described above. An output terminal of the photovoltaic module is connected to the direct-current side of the inverter; and the output terminal at the alternating-current side of the inverter is configured to connect the household power distribution system corresponding to the balcony photovoltaic system.

In an embodiment, the signal modulation module of the communication system is integrated into the inverter.

It can be seen from the above technical solutions, in the communication system for the balcony photovoltaic system according to the present disclosure, the signal modulation module can perform data transmission with the signal demodulation module by using the existing power line as a carrier of signal transmission without arranging an additional communication line between the signal modulation module and the signal demodulation module, thereby reducing the wiring workload. Moreover, the carrier (that is, the power line) of signal transmission has high stability, improving the stability of the communication connection between the signal modulation module and the signal demodulation module, thereby improving the stability of the communication connection between the inverter and the preset device according to the present disclosure. It can be seen that the present disclosure has advantages of improving the stability of the communication connection between the inverter and the preset device while reducing the wiring workload.

### BRIEF DESCRIPTION OF THE DRAWINGS

In order to illustrate the technical solutions in the embodiments of the present disclosure or in the conventional technology more clearly, the drawings used in the description of the embodiments or the conventional technology are briefly described hereinafter. Apparently, the drawings described hereinafter illustrate only embodiments of the present disclosure, and other drawings can be obtained by those skilled in the art based on the provided drawings without any creative efforts.
FIG. 1 is a schematic wiring diagram of a balcony photovoltaic system;
FIG. 2 is a schematic diagram of communication of the balcony photovoltaic system shown in FIG. 1; and
FIG. 3 is a schematic structural diagram of a communication system for a balcony photovoltaic system according to the present disclosure.

### DETAILED DESCRIPTION

The technical solutions according to the embodiments of the present disclosure are described clearly and completely hereinafter in conjunction with the drawings in the embodiments of the present disclosure. It is apparent that the described embodiments are only a part of the embodiments according to the present disclosure, rather than all of the embodiments. Any other embodiments obtained by those skilled in the art based on the embodiments in the present disclosure without any creative effort fall within the protection scope of the present disclosure.

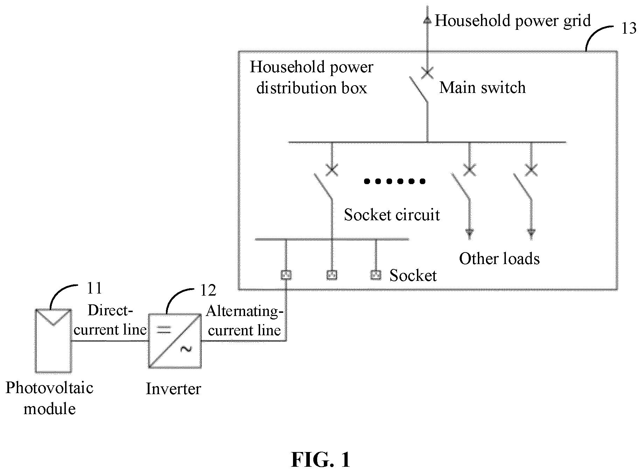

In recent years, with the continuous development of the renewable energy technology, a balcony photovoltaic system is increasingly applied in families. FIG. 1 is a schematic wiring diagram of a balcony photovoltaic system. Referring to FIG. 1, the balcony photovoltaic system includes a photovoltaic module 11 and an inverter 12. An output terminal of the photovoltaic module 11 is connected to a direct-current side of the inverter 12. An output terminal at an alternating-current side of the inverter 12 is connected to a household power distribution system 13 by inserting a special alternating-current plug into a socket of the household power distribution system 13 nearby. As a micro plug-in photovoltaic power generation system, the balcony photovoltaic system converts solar energy into electric energy and supplies power to the household power distribution system 13. In practice, a balcony photovoltaic power station serves as a micro power generation system, and the micro inverter is arranged outdoors. In an embodiment, the micro inverter is arranged at a bracket on the back of the module to avoid affecting household appearance.

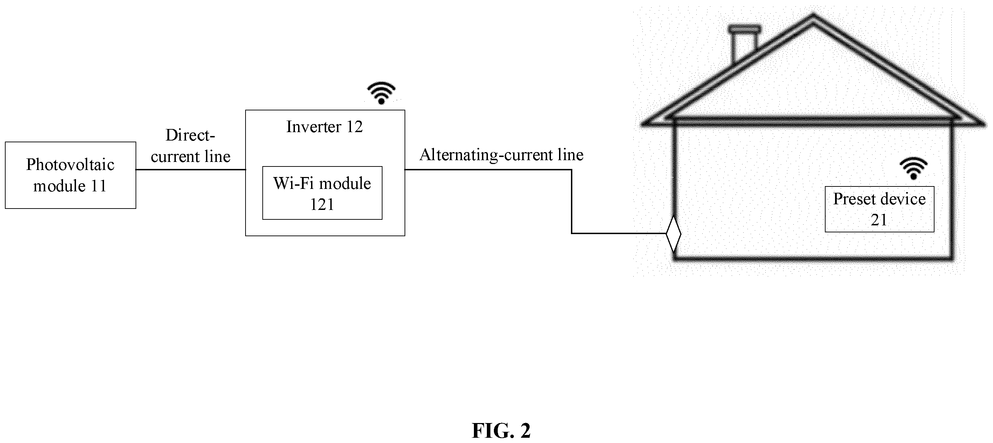

The inverter may collect operation data of the balcony photovoltaic system. In order to meet requirements of users to view the operation data of the balcony photovoltaic system, the inverter is provided with a Wi-Fi module. The inverter transmits the operation data to an indoor preset device through the Wi-Fi module, allowing that the users directly or indirectly obtain the operation data through the preset device. FIG. 2 is a schematic diagram of communication of the balcony photovoltaic system shown in FIG. 1. As shown in FIG. 2, the inverter 12 collects the operation data of the balcony photovoltaic system, and transmits the operation data to the indoor preset device 21 through the Wi-Fi module 121. The operation data includes a switching state of the inverter, a communication connection state between the inverter and the preset device, and a current, a voltage, a real-time power, a real-time power generation capacity, a total power generation capacity and an alternating-current frequency of the balcony photovoltaic system.

However, the inverter 12 is arranged outdoors, and the preset device is arranged indoors. The Wi-Fi module 121 of the inverter 12 is relatively far away from the preset device 21, and an obstacle such as a wall is arranged between the Wi-Fi module and the preset device, resulting in a poor stability of communication connection between the Wi-Fi module 121 and the preset device 21, and easily causing a problem of communication connection interruption. As a result, users fail to obtain operation data from the preset device 21, resulting in a poor user experience.

It should be noted that the balcony photovoltaic system is generally arranged at the outdoor balcony or a guard bar of the balcony. Especially, the balcony in the United States and Europe is different from the balcony in China in that the balcony in China communicates with the interior through a relatively large door opening, and the balcony in United States and Europe communicates with the interior through a relatively small door opening. That is, a wall of the balcony in United States and Europe has a relatively large area, causing a large attenuation in a signal transmitted by the Wi-Fi module of the inverter, thus resulting in unstable and interrupted signals. As a result, users fail to normally monitor the data of the power station through an APP, resulting in a poor user experience.

In order to improve the stability of the communication connection between the inverter 12 and the preset device 21, the following solution is provided. One terminal of a communication extension line with a suitable length is connected to a communication interface of the inverter 12, and another terminal is arranged at a position close to the preset device 21. For example, the position is at a window or a door (the position is located outdoors, such as a door opening at the balcony). A Wi-Fi signal is transmitted from the position to reduce to-be-crossed obstacles during the transmission of the signal, thus reducing a wireless communication distance between the inverter 12 and the preset device 21. However, this solution has heavy wiring workload.

Based on this, in order to improve the stability of the communication connection between the inverter and the preset device while reducing the wiring workload, a balcony photovoltaic system and a communication system for the balcony photovoltaic system are provided according to the present disclosure. The technical solutions of the present disclosure are described in detail in conjunction with the drawings.

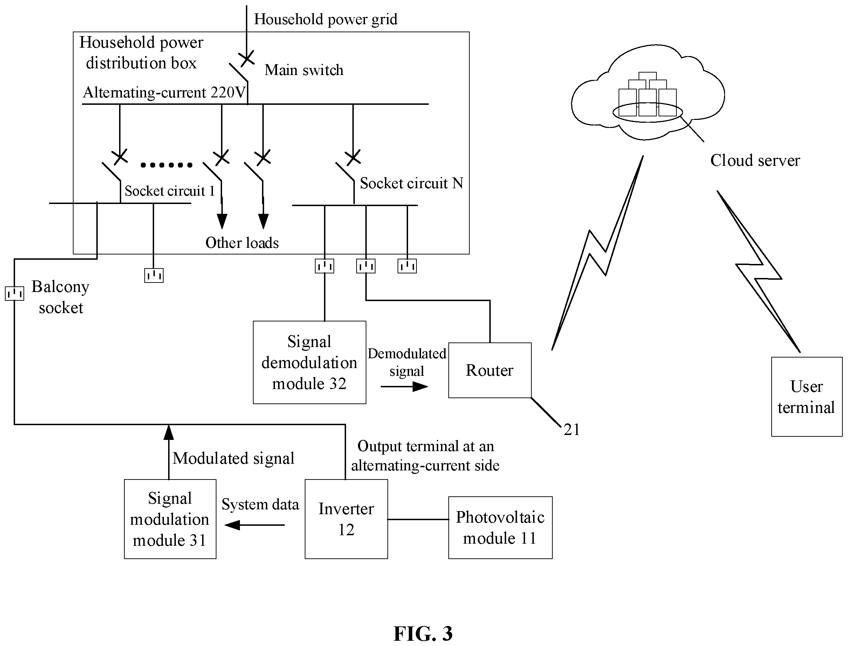

FIG. 3 is a schematic structural diagram of a communication system for a balcony photovoltaic system according to the present disclosure. As shown in FIG. 3, the communication system for the balcony photovoltaic system includes a signal modulation module 31 and a signal demodulation module 32.

An input terminal of the signal modulation module 31 is configured to connect a communication terminal of the inverter 12 in the balcony photovoltaic system, and receive system data (that is, the operation data described hereinbefore) of the inverter 12.

An output terminal of the signal modulation module 31 is configured to couple the output terminal at the alternating-current side of the inverter 12, and output a modulated signal of the system data to a power line for connecting the output terminal at the alternating-current side with a household power distribution system.

An input terminal of the signal demodulation module 32 is configured to connect the household power distribution system, and receive the modulated signal.

An output terminal of the signal demodulation module 32 is configured to connect the preset device 21, and output a demodulated signal of the modulated signal to the preset device 21.

In an embodiment, the output terminal at the alternating-current side of the inverter 12 is plugged into a balcony socket with a corresponding plug, so that the inverter is connected to the household power distribution system. The signal modulation module 31 may be integrated into the inverter 12 or may be independent of the inverter 12. In a case that the signal modulation module 31 is independent of the inverter 12, both the signal modulation module 31 and the inverter 12 are arranged on a first preset area of the balcony. In this way, the signal modulation module 31 is arranged close to the inverter 12, reducing a communication distance between the signal modulation module 31 and the inverter 12, thus reducing the wiring workload if the signal modulation module 31 is communicatively connected to the inverter 12 through a communication line, or improving the stability of a wireless communication connection between the signal modulation module 31 and the inverter 12 if the signal modulation module 31 is communicatively connected to the inverter 12 in a wireless manner.

The signal demodulation module 32 is arranged indoors. The input terminal of the signal demodulation module 32 is plugged into an indoor socket with a corresponding plug, so that the signal demodulation module 32 is connected to the household power distribution system. The signal demodulation module 32 may be integrated into the preset device 21 or independent of the preset device 21. Based on the same principle described above, in a case that the signal demodulation module 32 is independent of the preset device 21, both the signal demodulation module 32 and the preset device 21 are arranged on an indoor second preset area.

In practice, the inverter 12 transmits the collected system data of the balcony photovoltaic system to the signal modulation module 31. The signal modulation module 31 modulates the system data to obtain a modulated signal of the system data, and transmits the modulated signal to the power line through which the output terminal at the alternating-current side is connected to the household power distribution system. The modulated signal is transmitted to the signal demodulation module 32 along with current at the power line. The signal demodulation module 32 separates the modulated signal from the current, demodulates the modulated signal to obtain a demodulated signal of the modulated signal, and transmits the demodulated signal to the preset device 21.

According to the above technical solutions of the present disclosure, the signal modulation module can perform data transmission with the signal demodulation module by using the existing power line as a carrier of signal transmission without arranging an additional communication line between the signal modulation module and the signal demodulation module, thereby reducing the wiring workload. Moreover, the carrier (that is, the power line) of signal transmission has high stability, improving the stability of the communication connection between the signal modulation module and the signal demodulation module, thereby improving the stability of the communication connection between the inverter and the preset device according to the present disclosure. It can be seen that the present disclosure has advantages of improving the stability of the communication connection between the inverter and the preset device while reducing the wiring workload.

In addition, in the conventional technology, in order to improve the stability of the communication connection in a wired manner, a hole is defined at the wall of the balcony facing indoors for a communication line to pass through, and the communication line connects the router with the inverter at the balcony in a wired manner.

In an embodiment, carrier communication is performed by using the existing household power line in a plug-in manner without defining additional holes at the wall of the balcony facing indoors. Especially, in a case that the inverter is integrated with the signal modulation module, an alternating-current output line of the inverter is plugged into the balcony socket, and a demodulation module and a wireless transmission module are arranged at a socket closed to the router. Even if the inverter is not integrated with the signal modulation module, the user can easily install the signal modulation module with a plug in a plug-in manner. In general, the construction difficulty is greatly reduced, so that the user can install the signal modulation module independently without professional personnel or qualifications, and ultimately reducing the difficulty of promoting the balcony photovoltaic products.

In an embodiment of the present disclosure, the signal modulation module 31 is provided with a first power line communication (PLC) unit.

The signal demodulation module 32 is provided with a second PLC unit.

In an embodiment, the first PLC unit is configured to modulate, on receipt of the system data transmitted by the inverter 12, the system data to obtain the modulated signal of the system data, and transmit the modulated signal to the power line through which the output terminal of the alternating-current side is connected to the household power distribution system.

The second PLC unit is configured to separate the modulated signal from the current, demodulate the modulated signal to obtain the demodulated signal of the modulated signal, and transmit the demodulated signal to the preset device 21.

In an embodiment of the present disclosure, the signal demodulation module 32 may be integrated into the preset device 21. That is, the signal demodulation module 32 in the preset device 21 is connected to a communication terminal of the preset device 21, so that the signal demodulation module 32 is communicatively connected to the preset device 21 without arranging an additional device. For example, no communication line is additionally arranged between the signal demodulation module 32 and the preset device 21, and no wireless module for communication connection is additionally arranged between the signal demodulation module 32 and the preset device 21.

In an embodiment of the present disclosure, the signal demodulation module 32 may be integrated into other household device except the preset device 21, and the signal demodulation module 32 is further provided with a communication unit.

The signal demodulation module is communicatively connected to the preset device through the communication unit.

In an embodiment, the preset device 21 may be an existing device in the user's home. In some cases, it is not convenient to integrate the signal demodulation module 32 into the preset device 21. For example, the preset device 21 is not supported to integrate with the signal demodulation module 32, or the process of integrating the signal demodulation module 32 into the preset device 21 is complex and has a heavy workload. Therefore, in order to facilitate the installation of the signal demodulation module 32, the signal demodulation module 32 may be integrated into other household device except the preset device 21. For example, the signal demodulation module 32 may be integrated into a socket or a switch panel, the indoor environment is more concise compared with independently arranging a PLC module. In addition, the signal demodulation module 32 is further provided with the communication unit, in order to achieve the communication connection between the signal demodulation module 32 and the preset device 21.

Furthermore, the signal demodulation module 32 may be plugged into any one indoor socket with a plug of the signal demodulation module 32, and thus has high flexibility. Therefore, the signal demodulation module 32 and the preset device 21 can be arranged on the indoor second preset area under any application scenario of arrangement of the preset device 21 in the present disclosure.

In an embodiment of the present disclosure, the communication unit is a Wi-Fi unit or a wired communication unit.

In an embodiment of the present disclosure, the system data includes a subcarrier signal corresponding to a digital quantity and a subcarrier signal corresponding to an analog quantity.

In an embodiment, the switching state of the inverter and the communication connection state between the inverter and the preset device in the system data are digital. Other data (such as the current, the voltage, the real-time power, the real-time power generation capacity, the total power generation capacity and the alternating-current frequency of the balcony photovoltaic system) is analog. According to the present disclosure, the digital data and the analog data are transmitted respectively using two different subcarrier signals, thereby reducing a queuing phenomenon in the process of data transmission, and improving the efficiency of data transmission.

In an embodiment of the present disclosure, the preset device 21 is a router.

The preset device 21 is independent of the communication system. Alternatively, the preset device 21 is included in the communication system. The preset device 21 is configured to output the demodulated signal to a preset server.

In an embodiment, the preset server may be a cloud server. As shown in FIG. 3, the preset device 21 is the router and transmits, on receipt of the demodulated signal (including the demodulated system data), the demodulated signal to the cloud server. In a case that the user requires to view the system data of the balcony photovoltaic system, the user may log in to a preset application program with a user terminal, and transmit a query command for the system data to the cloud server through the preset application program. The cloud server transmits, on receipt of the query command for the system data, the system data to the user terminal. The user obtains the system data through a display content of the user terminal. The user terminal may be an electronic device such as a mobile phone or a computer.

In addition, the preset device 21 may further be other electronic device enabling users to obtain system data in the conventional technology, such as a computer.

Based on a general inventive concept, a balcony photovoltaic system is further provided according to the present disclosure. The balcony photovoltaic system includes at least one photovoltaic module, an inverter and the communication system for the balcony photovoltaic system as described above.

An output terminal of the photovoltaic module is connected to the direct-current side of the inverter.

An output terminal at an alternating-current side of the inverter is configured to connect a household power distribution system corresponding to the balcony photovoltaic system.

In an embodiment of the present disclosure, the signal modulation module of the communication system may be integrated into the inverter or independent of the inverter. It can be seen from the above description that in a case that the signal modulation module is independent of the inverter, both the signal modulation module and the inverter are arranged on the first preset area of the balcony. In this way, the signal modulation module is arranged close to the inverter, reducing a communication distance between the signal modulation module and the inverter, thus reducing the wiring workload if the signal modulation module is communicatively connected to the inverter through a communication line, or improving the stability of a wireless communication connection between the signal modulation module and the inverter if the signal modulation module is communicatively connected to the inverter in a wireless manner.

In an embodiment of the present disclosure, the inverter may be a micro inverter, and the inverter may be plugged into the balcony socket connected to the household power distribution system with a plug of the inverter.

It should be noted that the embodiments in the present disclosure are described in a progressive manner, and each of the embodiments focuses on its differences from the other embodiments. The same and similar parts among the embodiments may be referred to each other. The modules and sub-modules in the device and terminal of each embodiment of the present disclosure may be combined, divided and deleted according to actual requirements, and the features recorded in each embodiment may be replaced or combined.

In the embodiments of the present disclosure, it should be understood that the disclosed terminal and device may be implemented in other manners. For example, the divisions of the units or sub-units are merely logic functional divisions, and there may be other divisions in practice. For example, multiple sub-modules or modules may be combined, or may be integrated into another module, or some features may be ignored, or not be executed. In addition, the mutual coupling or direct coupling or communication connection shown or discussed may be through the indirect coupling or communication connection between some interfaces, devices or modules, and may be in electrical, mechanical or other forms.

The modules or sub-modules described as separate components may be or may not be physically separated, and the components as modules or sub-modules may be or may not be physical modules or sub-modules, that is, they may be located in one place, or may also be distributed on multiple network modules or sub-modules. Part or all of the modules or sub-modules can be selected according to actual requirements to achieve the purpose of the solution of this embodiment.

In addition, each functional module or sub-module in each embodiment of the present disclosure may be integrated into one processing module, or each module or sub-module may exist separately in a physical form, or two or more modules or sub-modules may be integrated into one module.

Finally, it should further be noted that in the present disclosure, relational terms such as first and second are only used to distinguish one entity or operation from another, and do not necessarily require or imply that any such actual relationship or order exists in these entities or operations. Moreover, the terms "comprising", "including" or any other variation thereof are intended to be non-exclusive, such that an article or device including a set of elements includes not only those elements but also other elements not expressly listed, or also include elements inherent in the article or device. Unless expressively limited, the statement "including a ..." does not exclude the case that other similar elements may exist in the article or the device other than enumerated elements.

With the above descriptions of the disclosed embodiments, those skilled in the art can implement or practice the present disclosure. Various modifications to the embodiments are apparent to those skilled in the art, and the general principle defined herein can be implemented in other embodiments without departing from the spirit or scope of the present disclosure. Therefore, the present disclosure is not limited to the embodiments shown herein, but is subject to the widest scope consistent with the principles and novel features disclosed herein.

## Claims

1. A communication system for a balcony photovoltaic system, comprising:
a signal modulation module; and
a signal demodulation module, wherein
an input terminal of the signal modulation module is configured to connect a communication terminal of an inverter in the balcony photovoltaic system, and receive system data of the inverter;
an output terminal of the signal modulation module is configured to couple an output terminal at an alternating-current side of the inverter, and output a modulated signal of the system data to a power line for connecting the output terminal at the alternating-current side with a household power distribution system;
an input terminal of the signal demodulation module is configured to connect the household power distribution system, and receive the modulated signal; and
an output terminal of the signal demodulation module is configured to connect a preset device, and output a demodulated signal of the modulated signal to the preset device.

2. The communication system for the balcony photovoltaic system according to claim 1, wherein
the signal modulation module is provided with a first power line communication, PLC, unit; and
the signal demodulation module is provided with a second PLC unit.

3. The communication system for the balcony photovoltaic system according to claim 2, wherein the signal demodulation module is integrated into the preset device.

4. The communication system for the balcony photovoltaic system according to claim 3, wherein
the signal demodulation module is integrated into other household device except the preset device, and the signal demodulation module is further provided with a communication unit; and
the signal demodulation module is communicatively connected to the preset device through the communication unit.

5. The communication system for the balcony photovoltaic system according to claim 4, wherein the other household device is a socket or a switch panel.

6. The communication system for the balcony photovoltaic system according to claim 4, wherein the communication unit is a Wi-Fi unit or a wired communication unit.

7. The communication system for the balcony photovoltaic system according to any one of claims 1 to 6, wherein the system data comprises a subcarrier signal corresponding to a digital quantity, and a subcarrier signal corresponding to an analog quantity.

8. The communication system for the balcony photovoltaic system according to any one of claims 1 to 6, wherein the preset device is a router, wherein
the preset device is independent of the communication system; or
the preset device is comprised in the communication system, wherein the preset device is configured to output the demodulated signal to a preset server.

9. A balcony photovoltaic system, comprising at least one photovoltaic module, an inverter and the communication system for the balcony photovoltaic system according to any one of claims 1 to 8, wherein
an output terminal of the photovoltaic module is connected to a direct-current side of the inverter; and
the output terminal at the alternating-current side of the inverter is configured to connect the household power distribution system corresponding to the balcony photovoltaic system.

10. The balcony photovoltaic system according to claim 9, wherein the signal modulation module of the communication system is integrated into the inverter.
